# EUROPEAN PATENT APPLICATION

(11) **EP 3 951 351 A1**
(43) Date of publication of application: **09.02.2022**
(21) Application number: 20782803.9
(22) Date of filing: 17.03.2020
(51) Int. Cl.: G01N 15/02, C21B 5/00, C21B 7/00

(54) **PARTICLE SIZE DISTRIBUTION MONITORING DEVICE, PARTICLE SIZE DISTRIBUTION MONITORING METHOD, COMPUTER PROGRAM, FURNACE, BLAST FURNACE, FURNACE CONTROL METHOD, AND BLAST FURNACE OPERATION METHOD**

(30) Priority: 02.04.2019 JP 2019070503
(71) Applicant: JFE Steel Corporation, Tokyo 100-0011 (JP)
(72) Inventor: YAMAHIRA, Naoshi, Chiyoda-ku, Tokyo 100-0011 (JP)
(74) Representative: Hoffmann Eitle
(86) International application number: PCT/JP2020/011709
(87) International publication number: WO 2020/203255

(57) **Abstract**

The present invention makes is possible to ascertain the particle size distribution of inserted material each time material has been inserted. Tha particle size distribution monitoring device according to the present invention comprises an information acquisition device for, at least once each time material has been inserted, acquiring information for identifying the particle size distribution of the inserted material and an information processing device for processing the information. The information processing device comprises a particles size distribution identification unit for identifying a particles size distribution each time material has been inserted on the basis of the information acquired by the information acquisition unit at least once each time material has been inserted and a particle size distribution display unit for visualizing the particle size distributions that have been identified by the particle size distribution identification unit each time material has been inserted, associating the visualized particle size distributions for each time material has been inserted with each time material has been inserted, and displaying the same on a screen.

## Description

### TECHNICAL FIELD

The present invention relates to a particle size distribution monitoring apparatus and a particle size distribution monitoring method, and more particularly to a particle size distribution monitoring apparatus and a particle size distribution monitoring method used for monitoring a particle size distribution of a charged raw material.

Further, the present invention also relates to a computer program for realizing the particle size distribution monitoring method.

Further, the present invention also relates to a furnace and a blast furnace including the particle size distribution monitoring apparatus.

Furthermore, the present invention also relates to a method of controlling a furnace, which method is carried out while monitoring the particle size distribution of a substance charged into the furnace, and a blast furnace operation method, which method is carried out while monitoring the particle size distribution of a raw material charged into the blast furnace.

### BACKGROUND ART

Monitoring a particle size distribution of a raw material to be charged is important for a treatment process using the raw material. For example, in an iron making process using a blast furnace, the particle size distribution of the raw material such as coke, ore, and sintered ore charged into the blast furnace can affect operation of the blast furnace. In particular, air permeability of the blast furnace is degraded when gaps formed between lumps of a raw material are filled with small lumps of the raw material or a powdery raw material. In general, a porosity, which is a ratio of the gaps, tends to decrease as a particle size distribution width of the raw material increases (distribution sharpness decreases).

Thus, a technique in which in-furnace information is acquired in real time in blast furnace operation, and the obtained information is utilized to perform efficient operation has already been developed. For example, in the technique described in Patent Literature 1, a distribution state of pressure data collected by a plurality of pressure sensors installed on a blast furnace facility is disposed on a two-dimensional plane accurately reflecting an installation position of each pressure sensor on the blast furnace facility to search for an isoline of the pressure data, and the magnitude or deflection angle of a permeate flow resistance vector of a gas flow in a furnace of a filling layer in the vicinity of a furnace wall is calculated based on the isoline.

On the other hand, in order to operate (drive) a blast furnace well, it is important to obtain the particle size distribution of the raw material in advance. However, in the technique described in Patent Literature 1, since it is not possible to obtain the particle size distribution of the raw material before the raw material is charged into the blast furnace, it is difficult to predict the air permeability in the furnace after the raw material is charged for operating (driving) the blast furnace.

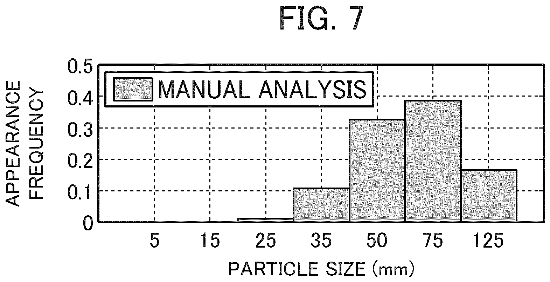

Examples of a method of obtaining the particle size distribution of the raw material before charging the raw material into the blast furnace include a method in which the raw material conveyed toward the blast furnace is periodically sampled, and using the sampled raw material as a target, the particle size distribution is identified by manual analysis. As a result of the analysis, the histogram shown in FIG. 7 is obtained, and an operator of the blast furnace perceives the particle size distribution of the raw material referring to the histogram. FIG. 7 is a histogram showing the particle size distribution of the raw material identified by a conventional method, where the horizontal axis shows the particle size (particle diameter: unit is mm) of the raw material, and the vertical axis shows an appearance frequency of the raw material having each particle size (strictly speaking, a ratio thereof to the number of samples of the raw material).

In the above method, the particle size distribution of the sampled raw material may be different from the particle size distribution of the raw material actually charged into the blast furnace. In particular, when a sampling cycle becomes long, the measured particle size distribution may be different from the particle size distribution of the raw material actually charged into the blast furnace.

In recent years, the particle size distribution of the raw material can be measured in real time, and an exemplary method thereof is the technique described in Patent Literature 2. In the technique described in Patent Literature 2, in order to measure a temporal change in the particle size distribution of particles, particle size distribution data constituted by two axes including a particle diameter and an amount of particles is stored for each measurement time, and a three-dimensional graph constituted by three axes including the particle diameter, the amount of particles, and the measurement time is displayed.

### CITATION LIST

### PATENT LITERATURE

Patent Literature 1: JP 3806403 B
Patent Literature 2: JP 5310255 B

### SUMMARY OF INVENTION

### TECHNICAL PROBLEMS

In the technique described in Patent Literature 2, it is possible to sequentially measure the particle size distribution of the raw material conveyed toward the blast furnace in each time of charging and obtain the particle size distribution at each measurement time point; however, the particle size distribution varies at measurement time points. Meanwhile, the operation of the blast furnace may be managed having one time of charging as one unit, and in consideration of the circumstances, it is important to obtain the particle size distribution of the raw material charged into the blast furnace in a single time of charging for each time of the charging.

The present invention has been made in view of the above circumstances, and the present invention aims at achieving the following objects.

An object of the present invention is to provide a particle size distribution monitoring apparatus and a particle size distribution monitoring method that solves the problems of the prior art and obtains a particle size distribution of a raw material charged for each time of charging.

Another object of the present invention is to provide a computer program for realizing the particle size distribution monitoring method, and a furnace and a blast furnace including the particle size distribution monitoring apparatus.

Another object of the present invention is to control a furnace while suitably controlling a particle size distribution of a substance charged into the furnace, and to operate a blast furnace while suitably monitoring a particle size distribution of a raw material charged into the blast furnace.

### SOLUTION TO PROBLEMS

In order to achieve the above object, a particle size distribution monitoring apparatus of the present invention includes: an information acquisition device that acquires information for identifying a particle size distribution of a raw material to be charged, at least once for each time of charging of the raw material; and an information processing device that processes the information, in which the information processing device includes a particle size distribution identification unit that identifies the particle size distribution for each time of the charging from the information acquired by the information acquisition device at least once for each time of the charging, and a particle size distribution display unit that visualizes the particle size distribution identified for each time of the charging by the particle size distribution identification unit, and displays a visualized particle size distribution for each time of the charging on a screen in association with the time of the charging.

In the particle size distribution monitoring apparatus of the present invention configured as described above, the particle size distribution of the charged raw material is identified for each time of charging, and the visualized particle size distribution obtained by visualizing the particle size distribution identified for each time the charging is displayed on the screen in association with the time of the charging. Thus, the particle size distribution of the charged raw material can be grasped for each time of charging.

In the particle size distribution monitoring apparatus of the present invention, it is preferable that the particle size distribution display unit displays the visualized particle size distribution for each time of the charging in a region corresponding to each time of the charging in a display range partitioned into a plurality of regions.

With the above configuration, the visualized particle size distribution for each time of the charging is displayed in the region corresponding to each time of the charging in the display range, so that it is easier to confirm the particle size distribution of the raw material for each time of charging.

In the particle size distribution monitoring apparatus of the present invention, it is preferable that the display range is defined by a first axis along a vertical direction of the screen and a second axis along a lateral direction of the screen, the plurality of regions are arranged along the first axis, each of the plurality of regions is partitioned into a plurality of rectangular regions arranged along the second axis, each of the plurality of rectangular regions is associated with a section of a particle size, a representative value of the section associated with each of the plurality of rectangular regions increases toward one end side in the lateral direction of the screen along the second axis, and the particle size distribution display unit displays, as the visualized particle size distribution, a color pattern image in which each of the plurality of rectangular regions is indicated by a color corresponding to an appearance frequency of the raw material for a particle size included in the section associated with each of the plurality of rectangular regions.

With the above configuration, by confirming the color of each rectangular region in the color pattern image that is the visualized particle size distribution, the appearance frequency of the raw material of the particle size included in the section associated with each of the rectangular regions can be grasped.

In the particle size distribution monitoring apparatus of the present invention, it is preferable that the particle size distribution display unit displays the visualized particle size distributions for the set number of times of charging so as to be aligned in order of the charging.

With the above configuration, the particle size distribution of the raw material in each time of charging can be grasped in order of the charging.

In the particle size distribution monitoring apparatus of the present invention, the particle size distribution display unit may display the visualized particle size distributions for the set number of times of charging so as to be aligned along the vertical direction of the screen in order of the charging.

In the above configuration, it is easier to grasp the particle size distribution of the raw material in each time of charging in order of the charging. When a ventilation distribution at each position in a height direction is grasped from the particle size distribution of the raw material at the position, an operator can easily determine a correspondence relationship between the particle size distribution and the position.

In the particle size distribution monitoring apparatus of the present invention, when the particle size distribution display unit displays the visualized particle size distribution for a latest time of charging, it is preferable that the particle size distribution display unit displays the visualized particle size distribution for the latest time of charging while deleting the visualized particle size distribution for the oldest time of charging and shifting a display position of the remaining visualized particle size distributions among the visualized particle size distributions for the set number of times of charging last displayed on the screen.

With the above configuration, it is possible to appropriately update the visualized particle size distribution displayed on the screen in accordance with an increase of the times of charging.

In the particle size distribution monitoring apparatus of the present invention, the raw material may be charged at each of a plurality of charging locations, the information acquisition device may be provided for each charging location, and information may be acquired at least once for each time of charging. The particle size distribution identification unit may identify the particle size distribution for each time of charging for each charging location, and the particle size distribution display unit may visualize the particle size distribution for each time of charging for each charging location and display the visualized particle size distribution for each time of charging on the screen separately for each charging location.

In the above configuration, when there are a plurality of locations where the raw material is charged, the particle size distribution of the raw material in each time of charging can be grasped for each charging location. As a result, it is possible to confirm deviation of the particle size distribution between the charging locations.

In the particle size distribution monitoring apparatus of the present invention, it is preferable that the information acquisition device acquires a plurality of pieces of information while the raw material to be charged in a single time of the charging is conveyed, and the particle size distribution identification unit identifies the particle size distribution for each time of the charging from the plurality of pieces of information acquired by the information acquisition device for the raw material to be charged in a single time of the charging.

With the above configuration, a plurality of pieces of information on the particle size distribution of the raw material are acquired while the raw material charged in a single time of charging is conveyed, and the particle size distribution is identified from the plurality of pieces of acquired information, so that validity of an identification result of the particle size distribution is improved.

In the particle size distribution monitoring apparatus of the present invention, it is preferable that the particle size distribution display unit displays an image schematically representing an inside of a raw material charging space on the screen together with the visualized particle size distribution for each time of charging, and displays each visualized particle size distribution for each time of charging in association with an image of a layer of the raw material formed for each time of charging in the raw material charging space in the image.

With the above configuration, it is possible to easily grasp which part of the raw material charging space each visualized particle size distribution corresponds to.

In order to solve the above-described problems, a particle size distribution monitoring method of the present invention includes: a step of acquiring information for identifying a particle size distribution of a raw material to be charged, at least once for each time of charging of the raw material; a step of identifying the particle size distribution for each time of the charging from the information acquired at least once for each time of the charging; and a step of visualizing the particle size distribution identified for each time of the charging and displaying a visualized particle size distribution for each time of the charging on a screen in association with the time of the charging.

According to the above-described method, the particle size distribution of the raw material charged into the blast furnace can be grasped for each time of charging.

In order to solve the above-described problems, a computer program of the present invention causes a computer to perform each step in the particle size distribution monitoring method of the present invention described above.

The above-described computer program is read and executed by the computer, thereby realizing the particle size distribution monitoring method of the present invention.

In order to solve the above-described problems, a furnace of the present invention includes the above-described particle size distribution monitoring apparatus of the present invention, in which a particle size distribution of a substance charged into the furnace is identified by the particle size distribution monitoring apparatus.

In the above-described furnace, it is possible to suitably monitor the particle size distribution of the substance charged into the furnace.

In order to solve the above-described problems, a blast furnace of the present invention includes the above-described particle size distribution monitoring apparatus of the present invention, in which a particle size distribution of a raw material charged into the blast furnace is identified by the particle size distribution monitoring apparatus.

In the above-described blast furnace, it is possible to suitably monitor the particle size distribution of the raw material charged into the blast furnace.

In order to solve the above-described problems, a method of controlling a furnace of the present invention includes: a step of acquiring information for identifying a particle size distribution of a substance charged into the furnace at least once for each time of charging of the substance; a step of identifying the particle size distribution for each time of the charging from the information acquired at least once for each time of the charging; a step of visualizing the particle size distribution identified for each time of the charging and displaying a visualized particle size distribution for each time of the charging on a screen in association with the time of the charging; and a step of setting a control condition of the furnace according to the visualized particle size distribution displayed on the screen.

According to the above-described method, it is possible to suitably control the furnace while suitably monitoring the particle size distribution of the substance charged into the furnace.

In order to solve the above-described problems, a blast furnace operation method of the present invention includes: a step of acquiring information for identifying a particle size distribution of a raw material charged into a blast furnace at least once for each time of charging of the raw material; a step of identifying the particle size distribution for each time of the charging from the information acquired at least once for each time of the charging; a step of visualizing the particle size distribution identified for each time of the charging and displaying a visualized particle size distribution for each time of the charging on a screen in association with the time of the charging; and a step of setting an operation condition of the blast furnace according to the visualized particle size distribution displayed on the screen.

According to the above-described method, it is possible to suitably operate the blast furnace while suitably monitoring the particle size distribution of the raw material charged into the blast furnace.

### ADVANTAGEOUS EFFECTS OF INVENTION

According to the present invention, it is possible to obtain the particle size distribution of the raw material charged for each charging batch. This makes it possible to favorably and intuitively perceive the state of the raw material charging space that changes depending on the charging batch of the raw material.

Further, according to the present invention, it is possible to control the furnace while suitably monitoring the particle size distribution of the substance charged into the furnace.

Furthermore, according to the present invention, it is possible to operate the blast furnace while suitably monitoring the particle size distribution of the raw material charged into the blast furnace.

### BRIEF DESCRIPTION OF DRAWINGS

[FIG. 1] FIG. 1 is a schematic view illustrating an internal structure of a blast furnace.
[FIG. 2] FIG. 2 is a schematic diagram illustrating an example of a particle size distribution monitoring apparatus according to an embodiment of the present invention and peripheral devices thereof.
[FIG. 3] FIG. 3 is a diagram illustrating a display example of visualized particle size distribution.
[FIG. 4] FIG. 4 is a diagram illustrating a display example of the visualized particle size distribution and a blast furnace image.
[FIG. 5] FIG. 5 is a diagram illustrating a flow of a particle size distribution monitoring method according to an embodiment of the present invention.
[FIG. 6] FIG. 6 is a diagram illustrating a display example of visualized particle size distribution according to a second embodiment.
[FIG. 7] FIG. 7 is a histogram illustrating a particle size distribution of a raw material identified by a conventional method.

### DESCRIPTION OF EMBODIMENTS

An embodiment (present embodiment) of the present invention will be described in detail below with reference to preferred embodiments shown in the accompanying drawings. The embodiments described below are merely examples given to facilitate understanding of the present invention, and do not limit the present invention. That is, the present invention can be modified and improved from the embodiments described below without departing from the gist thereof. Of course, the present invention includes equivalents thereof.

### <<Structure of blast furnace and blast furnace operation method>>

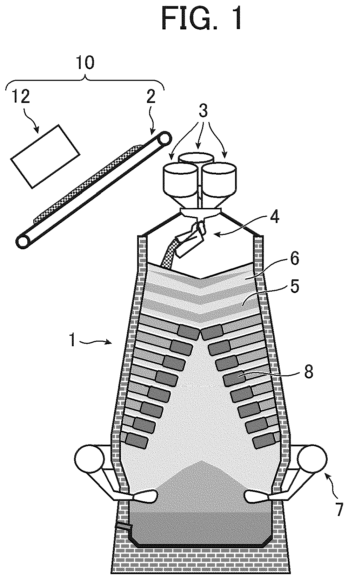

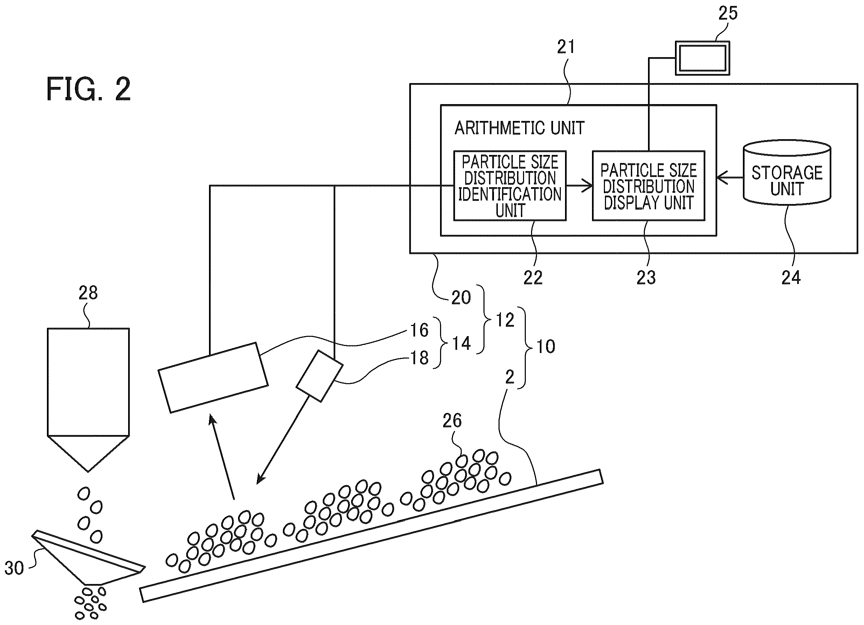

The structure and operation method of a blast furnace 1 will be described with reference to FIGS. 1 and 2. In the blast furnace 1, in order to produce hot metal from iron ore (hereinafter, referred to as "ore") in an iron making process, raw materials such as coke, ore, and sintered ore are charged from the top of the blast furnace 1. In a single time of charging (hereinafter, also referred to as "batch"), one type of raw material in a predetermined amount is charged into the blast furnace 1, and raw materials of different types from each other are charged into the blast furnace 1 in separate batches. That is, an inside of the blast furnace 1 corresponds to a raw material charging space.

Various types of raw materials are conveyed such that an amount of the raw material for one batch is conveyed by a conveyor 2 toward the top of the blast furnace 1 in each time of charging. In each time of the charging batch, one batch of coke 26 as the raw material is cut out from a supply hopper 28 illustrated in FIG. 2 and sieved by a sieve 30, and, after coke having a particle size smaller than a sieve opening size of the sieve 30 is dropped, the remaining coke is conveyed by the conveyor 2. The raw material on the conveyor 2 is delivered to a receiving hopper 3 provided at the top of the blast furnace 1 and temporarily stored. The same number of receiving hoppers 3 as the number of the types of raw materials are provided, and the raw material of the corresponding type is stored in each of the receiving hoppers 3.

One batch of the raw material stored is charged into the blast furnace 1 through a charging chute 4. The raw material is charged in layers. When the receiving hopper 3 leading to the charging chute 4 is switched, the type of the raw material that is charged is changed, and ore and coke are alternately charged in layers into the blast furnace 1. As the number of times of charging of the raw material increases, in the blast furnace 1, layers of the raw materials (specifically, an ore layer 5 and a coke layer 6) are stacked in order from the lower side of the blast furnace 1. As a result, the layers 5 and 6 for the set number of times of charging are deposited in the blast furnace 1.

A tuyere 7 is provided in a lower portion of the blast furnace 1, and hot air is sent into the blast furnace 1 through the tuyere 7 and passes through gaps in the ore layer 5 and the coke layer 6 (gaps between lumps of raw materials). The ore in the blast furnace 1 is heated and reduced to become hot metal, and is sequentially discharged from a bottom of the blast furnace 1. A region where ore is completely melted in the blast furnace 1 is referred to as a cohesive zone 8.

Air permeability in the blast furnace 1 is determined depending on how hot air is blown, the layer structure formed by the various raw materials, a particle size distribution of the raw material in the layer, and the like. In general, as the distribution width of the particle size distribution becomes wider, gaps formed between lumps of raw materials tend to be filled with small lump-shaped or powdery raw materials, so that the air permeability degrades. Thus, while the blast furnace 1 is operated, the particle size distribution of the raw material charged into the blast furnace 1 is confirmed by an operator of the blast furnace 1. In the present embodiment, the particle size distribution of the raw material charged into the blast furnace 1 in each time of charging is managed for each time of the charging.

In the present embodiment, an operation condition of the blast furnace 1 is set according to the particle size distribution of the raw material for each time of charging. Specifically, when the distribution width (for example, the variance value) of the particle size distribution of the raw material charged into the blast furnace 1 in a certain time of charging exceeds a threshold, a rate of a hot air blast into the blast furnace 1 is reduced, or a ratio of an amount of coke to an amount of ore charged in a certain time of charging is increased.

### <<Configuration of particle size distribution monitoring apparatus according to present embodiment>>

Next, a configuration of a particle size distribution monitoring apparatus 12 according to the present embodiment will be described with reference to FIG. 2.

As illustrated in FIG. 2, the particle size distribution monitoring apparatus 12, together with the conveyor 2, constitutes a particle size distribution monitoring system 10. A particle size distribution monitoring system 10 is provided for monitoring the particle size distribution of the raw material charged into the blast furnace 1, identifies the particle size distribution of one batch of the raw material while conveying one batch of the raw material toward the top of the blast furnace 1, and visualizes and displays the identified particle size distribution on a monitoring screen (hereinafter, a screen 25) for the operator. The particle size distribution is identified and visualized on a batch-by-batch basis as described above. When a plurality of types of raw materials such as ore and coke 26 are charged, charging of each type of raw material per one time is regarded as one batch. In this case, the particle size distribution is identified and visualized for every batch of one type of raw material (for example, the coke 26), while the identification and visualization of the particle size distribution are not necessarily performed for every batch of the other type of raw material (for example, ore). Conversely, the identification and visualization of the particle size distribution may be performed for every batch of all the types of raw materials.

As illustrated in FIG. 2, the particle size distribution monitoring apparatus 12 includes an information acquisition device 14 and an information processing device 20, and identifies and visualizes the particle size distribution of the coke 26 for every batch.

The information acquisition device 14 is a device that acquires information for identifying the particle size distribution of one batch of the coke 26 at least one time for each batch. While one batch of the coke 26 is conveyed by the conveyor 2, the information acquisition device 14 acquires the information for identifying the particle size distribution of one batch of the coke 26 a plurality of times.

The information acquisition device 14 is not particularly limited, and includes a laser range finder in the present embodiment. The laser range finder includes a device body 16 and a laser irradiator 18 installed above the conveyor 2. The device body 16 measures a distance to the coke 26 in real time by receiving reflected light obtained when a laser beam emitted from the laser irradiator 18 is reflected by the coke 26 on the conveyor 2. By performing this measurement, the information acquisition device 14 acquires measurement data indicating a distance from the device body 16 to the coke 26 as the information for identifying the particle size distribution of the coke 26. Identification of the particle size distribution by the information acquisition device 14, that is, acquisition of the measurement data is preferably performed before the coke 26 is charged into the blast furnace 1. Thus, the device body 16 and the laser irradiator 18 are preferably arranged on the front side from the blast furnace 1, and are preferably arranged near an end on a downstream side of the conveyor 2 (receiving hopper 3 side).

The laser irradiator 18 irradiates one batch of the coke 26 conveyed by the conveyor 2 with a laser beam at a cycle of 1/10000 seconds to 1/1000 seconds. The device body 16 performs measurement on one batch of the coke 26 at an interval of 1000 to 10000 lines/second. The device body 16 arranges linear measurement data, acquired by each measurement, in time series to obtain profile data of the coke 26, and outputs the profile data to the information processing device 20.

As described above, by measuring the particle size distribution for one batch of the coke 26 a plurality of times, representativeness of a measurement target is secured, and credibility of the measurement result of the particle size distribution is also enhanced.

The information processing device 20 processes information (profile data of the coke 26) acquired by the information acquisition device 14. The information processing device 20 is configured by a general-purpose computer such as a workstation or a personal computer including an arithmetic unit 21 and a storage unit 24. The arithmetic unit 21 includes a processor such as a CPU, and functions as a particle size distribution identification unit 22 and a particle size distribution display unit 23 by executing a computer program stored in the storage unit 24.

The arithmetic unit 21 controls the device body 16 and the laser irradiator 18 of the information acquisition device 14 using the program and data stored in the storage unit 24. The storage unit 24 stores a program and data for controlling the device body 16 and the laser irradiator 18, and a program and data for causing the arithmetic unit 21 to realize functions as the particle size distribution identification unit 22 and the particle size distribution display unit 23.

The particle size distribution identification unit 22 identifies the particle size distribution of the coke 26 for each time of charging from the information acquired at least one time for each time of charging by the information acquisition device 14. The particle size distribution identification unit 22 identifies the particle size distribution of one batch of the coke 26 on a batch-by-batch basis based on profile data indicating results of a plurality of measurements performed on one batch of the coke 26 by the information acquisition device 14.

In order to identify the particle size distribution of the coke 26, for example, unevenness data of the coke 26 is extracted from the profile data of the coke 26 described above, and image processing is performed on the extracted unevenness data to perform particle separation processing of the coke 26. The particle separation processing is processing for identifying each particle appearing in an image as an individual object, and examples thereof include watershed algorithm. The particle size distribution identification unit 22 identifies the particle size distribution of one batch of the coke 26 by measuring the particle size (particle diameter) of the coke 26 individually separated by the particle separation processing and counting an appearance frequency (the number of particles) for each particle size section.

As described above, the particle size distribution of the coke 26 is obtained from the results of a plurality of measurements performed on one batch of the coke 26, and the obtained particle size distribution is summarized (integrated) on a batch-by-batch basis, whereby the particle size distribution of the coke 26 for each batch can be identified.

By identifying the particle size distribution on a batch-by-batch basis, a highly reliable and appropriate particle size distribution can be obtained for the coke 26 charged into the blast furnace 1. In a single measurement, only the particle size distribution of the coke 26 present in a certain range (for example, a range of about 1 m in a conveying direction of the conveyor 2,) can be measured. Due to particle segregation in a supply hopper 51 and the small number of pieces of coke within the measurement range, a statistical variation may occur in each measurement result. Thus, it is difficult to set each measurement result as a representative value of the particle size distribution of the coke 26 to be charged into the blast furnace 1. On the other hand, in the present embodiment, the particle size distribution of one batch of the coke 26 is measured a plurality of times and integrated on a batch-by-batch basis. This improves the statistical variation and also improves validity of the particle size distribution of the coke 26.

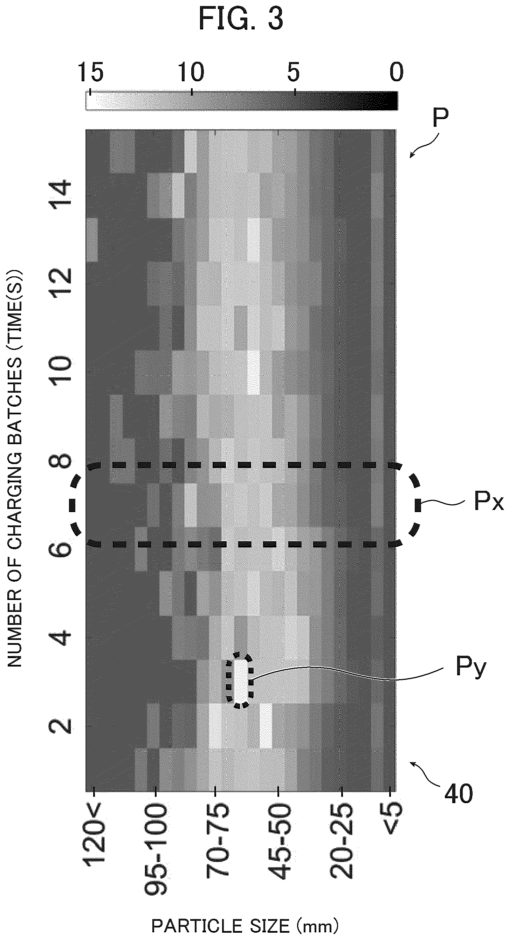

The particle size distribution display unit 23 visualizes the particle size distribution of the coke 26 identified for each time of charging by the particle size distribution identification unit 22, and displays a visualized particle size distribution for each time of charging on the screen 25. The visualized particle size distribution is a two-dimensional graph showing the particle size distribution on the screen 25, and is a color pattern image 40 to be described later (see FIG. 3). The visualized particle size distribution is not limited to a two-dimensional graph, and may be a three-dimensional graph.

By checking the graph (visualized particle size distribution) showing the particle size distribution of the coke 26 for each time of charging as described above, the operator can determine quality of the particle size distribution of the coke 26 for each time of charging and perceive a fluctuation tendency (trend) of the particle size distribution.

### <<Visualized particle size distribution>>

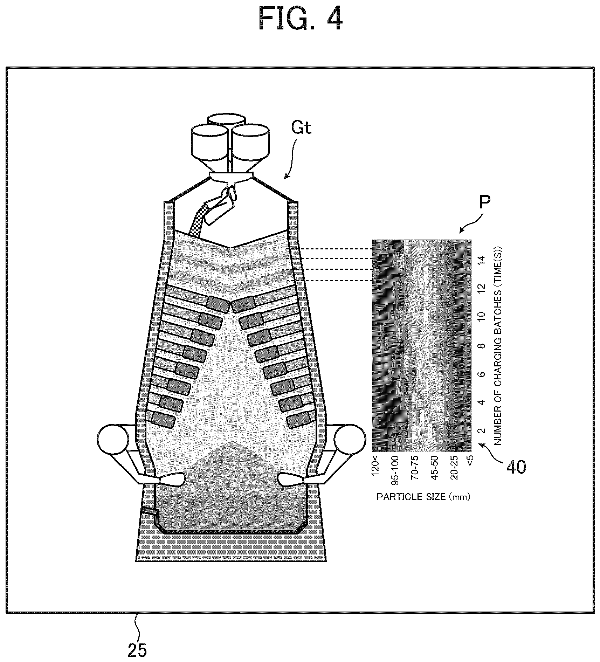

The visualized particle size distribution will be described with reference to FIGS. 3 and 4. Display examples of the visualized particle size distribution illustrated in FIGS. 3 and 4 are merely examples, and a display form, displayed items, and the like can be freely set without departing from the gist of the present invention.

As described above, the visualized particle size distribution is a two-dimensional graph showing the particle size distribution of the coke 26, and is the color pattern image 40 illustrated in FIG. 3. The color pattern image 40 corresponds to a histogram indicating the particle size distribution of the coke 26, and is displayed in a display range P in the screen 25 by the particle size distribution display unit 23.

The particle size distribution display unit 23 creates the color pattern image 40, which is the visualized particle size distribution, for each time of charging, and displays each of the color pattern images 40 for each time of charging in the display range P in association with the time of charging. As illustrated in FIG. 3, the display range P is a rectangular range defined by a first axis along a vertial direction of the screen 25 and a second axis along a lateral direction of the screen 25.

The display range P is partitioned into a plurality of regions Px as illustrated in FIG. 3. The plurality of regions Px are arranged along the first axis, and each of the regions Px is a rectangular region extending long along the second axis. The particle size distribution display unit 23 displays each of the color pattern images 40 for each time of charging in the region Px corresponding to each time of charging in the display range P partitioned into the plurality of regions Px.

The color pattern image 40 for each time of charging is a graph represented by a value of the first axis, a value of the second axis, and the color. The first axis is an axis representing an order of times of charging, and the lower a position on the axis is, the older time of charging is. A position (specifically, arrangement order) on the first axis of the color pattern image 40 displayed in each of the plurality of regions Px indicates in which time of charging the coke 26 whose particle size distribution shown by the color pattern image 40 is charged in into the blast furnace 1. For example, the color pattern image 40 displayed in the uppermost region Px represents the particle size distribution of the coke 26 charged into the blast furnace 1 in the latest time of charging. The color pattern image 40 displayed in the second region Px from the top represents the particle size distribution of the coke 26 charged into the blast furnace 1 in the time of charging of the one before the latest.

The second axis is an axis representing a plurality of sections set for the particle size of the coke 26, more strictly, the particle size. Numerical values attached to the second axis in FIG. 3 indicate upper and lower limit values of each section. Each of the plurality of regions Px is partitioned into a plurality of rectangular regions Py arranged along the second axis, and a section of the particle size is associated with each of the plurality of rectangular regions Py. For example, the rectangular region Py at a position with a numerical value "20 to 25" on the second axis is associated with a section having a particle size of 20 mm to 25 mm. The section of the particle size associated with each of the rectangular regions Py changes at intervals of 5 mm along the second axis, and becomes larger as it is located on one end side (left side in FIG. 3) on the second axis. In the color pattern image 40 of FIG. 3, the rectangular region Py located at an endmost position on one side (left side) on the second axis corresponds to a section exceeding 120 mm, and the rectangular region Py located an endmost position on the other side (right side) corresponds to a section less than 5 mm.

In FIG. 3, for convenience of illustration, a scale and a numerical value of the corresponding section are indicated only for some of the rectangular regions Py; however, the section of the particle size associated with each of the rectangular regions Py is determined according to the above-described manner. For example, when viewed from the rectangular region Py associated with the section having a particle size of 20 mm to 25 mm, the neighboring rectangular region Py on the left side corresponds to the section having a particle size of 25 mm to 30 mm.

The particle size distribution display unit 23 calculates the appearance frequency (number of particles) of the coke 26 having the particle size corresponding to each section for each section from the particle size distribution of the coke 26 identified by the particle size distribution identification unit 22. As illustrated in FIG. 3, the particle size distribution display unit 23 indicates the rectangular region Py corresponding to each of the sections in a color corresponding to the obtained appearance frequency of the coke 26. In this manner, the color pattern image 40 is formed. The "color" includes a tint and a shade.

In FIG. 3, for convenience of illustration, a difference in color is expressed in gray scale (black-and-white shading). However, in practice, each of the rectangular regions Py has a color, and the difference in color is expressed by changing the tint or shade. A correspondence relationship between the color of the rectangular region Py and the appearance frequency of the coke 26 is represented by a scale bar disposed above the color pattern image 40 in FIG. 3. In the scale bar, the color gradually changes from one end to the other end, and the appearance frequency is associated with the color at each position. When the tint changes in the scale bar, the appearance frequency increases as it approaches from the tint on one end to the tint on the other end. Here, the number of tints (the number of phases) used in the color bar may be two phases or three or more phases. The tints located at both ends are preferably complementary to each other. When the black-and-white shading changes in the scale bar, the appearance frequency may increase as the color becomes closer to white; however, the present invention is not limited thereto, and the appearance frequency may increase as the color becomes closer to black.

The appearance frequency of the coke 26 in a section associated with the rectangular region Py is a value associated with a position of the same color of the rectangular region Py in the scale bar. Here, a value of the appearance frequency indicated by the scale bar is represented by a ratio to a total value when the total value of 100% is obtained by summing the appearance frequencies of the plurality of rectangular regions Py at the same height on the first axis. In other words, the appearance frequency represented by the color of each of the rectangular regions Py is a ratio (%) to a total amount of particles of the coke 26 charged into the blast furnace 1 in that time of charging.

As described above, the particle size distribution display unit 23 displays, as the visualized particle size distribution, the color pattern image 40 in which each of the plurality of rectangular regions Py is filled with the color corresponding to the appearance frequency of the coke 26 having the particle size included in a section associated with the rectangular region Py. By viewing the color pattern image 40, the operator can intuitively perceive the particle size distribution of one batch of the coke 26. In particular, the particle size distribution width can be confirmed from a degree of color spread in the color pattern image 40, and in addition, a degree of a ratio (porosity) of the gaps in the coke layer 6 in the blast furnace 1 can be understood from the particle size distribution width. For example, as the distribution width is narrower (wider), the porosity is larger (smaller). Furthermore, it is also possible to obtain a median value (average value) of the particle size distribution by capturing a median position of the particle size distribution.

As illustrated in FIG. 3, the particle size distribution display unit 23 displays the color pattern images 40 (visualized particle size distributions) for the set number of times of charging to be aligned along the vertical direction of the screen 25 in order of times of charging. The number of color pattern images 40 displayed in alignment is not particularly limited, and in the present embodiment, the color pattern images 40 for the number of times of charging corresponding to the number of the coke layers 6 deposited in the blast furnace 1 are displayed so as to be aligned in order of times of charging. Thus, the operator can obtain the particle size distribution of the coke 26 deposited in the blast furnace 1 for each time of charging.

As illustrated in FIG. 4, the particle size distribution display unit 23 displays a blast furnace image Gt that schematically represents the inside of the blast furnace 1, on the screen 25 together with the color pattern image 40 for each time of charging, and displays each of the color pattern images 40 for each time of charging in association with an image of the coke layer 6 formed for each time of charging inside the blast furnace 1 in the blast furnace image Gt. For example, the color pattern image 40 indicating the particle size distribution of the coke 26 charged in the blast furnace 1 in a certain time of charging is displayed together with an image of the coke layer 6 formed by the coke 26 charged in the blast furnace 1 in that time of charging side by side. Thus, the operator can percieve the particle size distribution in each of the coke layers 6 stacked in the blast furnace 1 by layer.

The particle size distribution display unit 23 appropriately updates the color pattern image 40 for each time of charging displayed on the screen 25 according to the progress of the operation.

When the coke 26 to be charged into the blast furnace 1 in the latest time of charging is conveyed by the conveyor 2, the particle size distribution identification unit 22 identifies the particle size distribution of the coke 26 for the latest time of charging. The particle size distribution display unit 23 deletes the color pattern image 40 (that is, the color pattern image 40 in the lowermost row) corresponding to the oldest time of charging among a predetermined number of the color pattern images 40 (specifically, the color pattern images 40 for the set number of times of charging) displayed on the screen 25 immediately before, shifts display positions of the remaining color pattern images 40 downward one by one, and displays a color pattern image 40 corresponding to the latest time of charging in the region Px in the uppermost row.

Since the color pattern image 40 displayed on the screen 25 is updated each time the coke 26 is charged, the operator can perceive the particle size distribution in the coke layer 6 each time a new coke layer 6 is formed in the blast furnace 1.

In the present embodiment, the operation condition of the blast furnace 1 is set according to the color pattern image 40 displayed on the screen 25. For example, when the color pattern image 50 in which the distribution width of the particle size distribution is relatively wide is displayed in the plurality of regions Px in the upper part of the display range P, it is determined that the porosity is small in the coke 6 located in an upper layer in the blast furnace 1. When these coke layers 6 descend in accordance with the progress of the operation, it is expected that the air permeability in the blast furnace 1 will degrade in the future, and therefore, an amount of hot air blown into the furnace is reduced in advance, or another operation condition of the blast furnace is set (changed). Alternatively, when the distribution width of the particle size distribution of the coke 26 to be charged into the blast furnace 1 in a new charging batch is relatively wide, the coke 26 may be removed so as not to be charged into the blast furnace 1.

### <<Particle size distribution monitoring method according to present embodiment>>

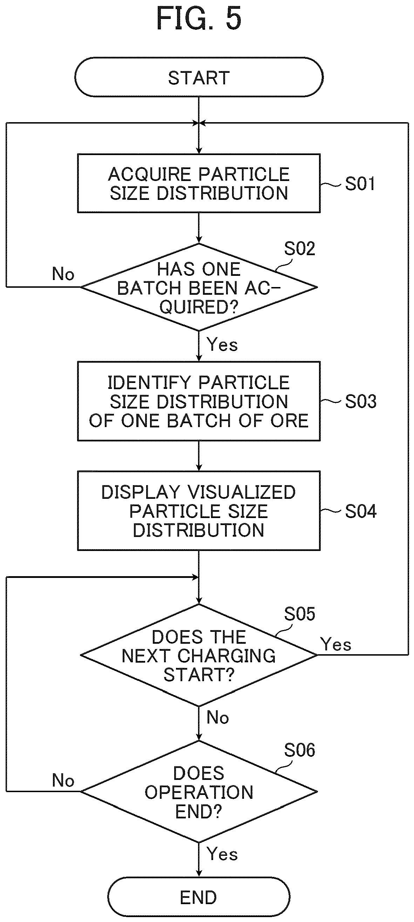

Next, a procedure of a particle size distribution monitoring method according to the present embodiment will be described with reference to FIG. 5. When the operation of the blast furnace 1 is started, one batch of the coke 26 is cut out from the supply hopper 28, sieved through the sieve 30, and then conveyed by the conveyor 2 toward the top of the blast furnace 1. Accordingly, a series of steps related to particle size distribution monitoring is performed according to the procedure illustrated in FIG. 5.

First, while one batch of the coke 26 is conveyed by the conveyor 2, the information acquisition device 14 acquires information (in FIG. 5, described as "particle size distribution information") for identifying the particle size distribution of the coke 26 (S01). In the present embodiment, the laser range finder constituting the information acquisition device 14 measures the distance to the coke 26, and acquires the measurement data indicating the measurement result as the particle size distribution information.

The information acquisition device 14 repeatedly performs the above measurement on one batch of the coke 26 being conveyed by the conveyor 2 a plurality of times, and sequentially acquires the measurement data of the respective measurements (S02). The measurement data of the respective measurements is arranged to constitute profile data, and is output to the information processing device 20.

Next, the particle size distribution identification unit 22 identifies the particle size distribution of one batch of the coke 26 based on the profile data including the measurement data of the respective measurements (S03). In this step S03, the particle size distribution of the coke 26 is identified on a batch-by-batch basis (for each time of charging).

Next, the particle size distribution display unit 23 visualizes the particle size distribution identified by the particle size distribution identification unit 22, and displays the color pattern image 40 as the visualized particle size distribution on the screen 25 (S04).

Then, when the coke 26 in an amount for the next time of charging to be charged into the blast furnace 1 is conveyed by the conveyor 2 (S05), a series of steps S01 to S04 described above is repeatedly performed. As a result, the color pattern images 40 for a predetermined number of times of charging (specifically, the number of times corresponding to the number of the coke layers 6 stacked in the blast furnace 1) are displayed on the screen 25 in a state of being arranged side by side along the vertical direction of the screen 25. At this time, each of the color pattern images 40 is displayed in association with the corresponding time of charging.

After the color pattern images 40 corresponding to a predetermined number of times of charging are displayed, when the coke 26 for a new charging batch is conveyed by the conveyor 2, the color pattern image 40 for the oldest time of charging (that is, the color pattern image 40 in the lowermost row) is deleted among the color pattern images 40 for the predetermined number of times of charging, and the display positions of the remaining color pattern images 40 are lowered one by one. Then, the color pattern image 40 for the latest time of charging is displayed in the uppermost row.

Steps S01 to S05 described above are repeated until the operation of the blast furnace 1 is ended (S06), and are interrupted at the end of the operation.

During an operation period of the blast furnace 1, it is preferable to set the operation condition of the blast furnace 1 according to the visualized particle size distribution (color pattern image 40) displayed on the screen 25 in step S04 according to the blast furnace operation method of the present invention.

### <<Second Embodiment>>

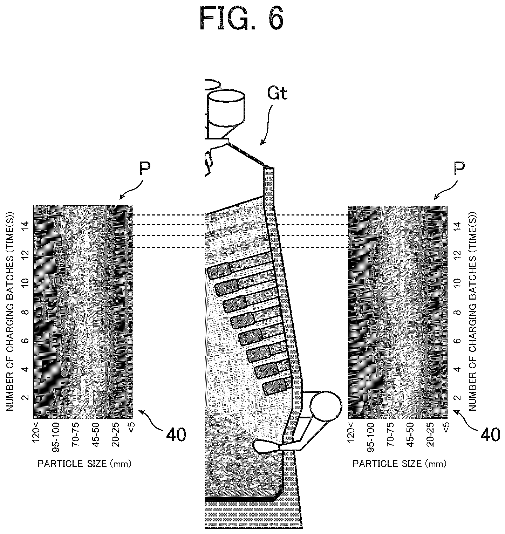

In the above embodiment (hereinafter referred to as the first embodiment), the raw material is charged in only one place in the blast furnace 1, but the present invention is not limited thereto. For example, a plurality of charging locations where the raw material is charged may be provided in the blast furnace 1. In this case, the properties and the like of the raw material to be charged may be changed according to the charging location. This configuration (hereinafter referred to as the second embodiment) will be described with reference to FIG. 6.

The number of charging locations is not particularly limited, and in the following description, it is assumed that there are two charging locations.

In the second embodiment, coke as a raw material is charged into each of the two charging locations in the blast furnace 1. One of the two charging locations is a first charging location closer to the center of the blast furnace 1, and the other charging location is a second charging location closer to an inner wall of the blast furnace 1. At the respective charging locations, different types of coke having different properties are separately charged. The coke having a different property is coke having a different particle size, and coke having a larger particle size and a better property is charged into the first charging location. On the other hand, coke having a smaller particle size and a lesser property is charged into the second charging location.

In the second embodiment, a supply hopper 28, a sieve 30, a conveyor 2, and an information acquisition device 14 are provided for each charging location. One batch of coke charged into the respective charging locations is cut out from the supply hopper 28 by charging location, sieved through the sieve 30, and then conveyed by the conveyor 2. Coke charged from the respective charging locations in a single time of charging is deposited at the same height in the blast furnace 1 and form the same coke layer 6.

In the second embodiment, each of the information acquisition devices 14 provided for each charging location acquires information for identifying the particle size distribution of coke at least once for each time of charging (for each batch). The content of information to be acquired, the information acquisition procedure, and the like are the same as those in the first embodiment.

In the second embodiment, a particle size distribution identification unit 22 of an information processing device 20 identifies the particle size distribution of one batch of coke for each time of charging for each charging location. The procedure for identifying the particle size distribution and the like are the same as those in the first embodiment.

In the second embodiment, a particle size distribution display unit 23 visualizes the particle size distribution of one batch of coke for each charging location, and displays a color pattern image 40 for each time of charging separately for each charging location on a screen 25 as illustrated in FIG. 6.

Specifically, similarly to the first embodiment, the color pattern images 40 corresponding to a predetermined number of times of charging are displayed together with a blast furnace image Gt. Each of the color pattern images 40 is displayed in association with an image of the coke layer 6 formed for each time of charging inside the blast furnace 1 in the blast furnace image Gt.

In the second embodiment, as illustrated in FIG. 6, the color pattern image 40 showing the particle size distribution of coke charged into the first charging location is displayed in alignment with an image showing a center of the blast furnace 1 in the blast furnace image Gt. The color pattern image 40 showing the particle size distribution of coke charged into the second charging location is displayed in alignment with an image showing an inner wall of the blast furnace 1 in the blast furnace image Gt.

As described above, in the second embodiment, in addition to the particle size distribution of the coke for each time of charging (for each batch), deviation of the particle size distribution between the charging locations is visualized, so that the operation condition of the blast furnace 1 can be set based on the particle size distribution at each charging location. For example, since coke having a larger particle size is charged into the first charging location closer to the center of the blast furnace 1, the blast furnace 1 is operated under a condition that an amount of hot air flowing through the center of the blast furnace 1 is increased. During the operation of the blast furnace 1 under such a condition, the deviation of the particle size distribution between the charging locations is visualized. This makes it possible to confirm a change in a ratio between an amount of hot air near the center of the blast furnace 1 and an amount of hot air near the inner wall.

When a magnitude relationship between the particle size distribution near the center of the blast furnace 1 and the particle size distribution near the inner wall fluctuates in a vertical direction of the blast furnace 1, it is determined that the reaction in the furnace is not promoted. In such a situation, the operator can take a countermeasure such as increasing a ratio (coke ratio) of an amount of coke to an amount of ore to facilitate the reaction. Alternatively, it is expected that the cause of the above situation is that an amount of coke to be charged is not suitably distributed to the respective charging locations. Thus, information on the particle size distribution may be fed back to a raw material supply condition such as an amount cut from each of the supply hoppers 38, and the distribution of an amount of coke to be charged at the respective charging locations may be adjusted.

### <<Other embodiments>>

Although one embodiment of the present invention has been described above, the above embodiment is merely an example, and other embodiments are also conceivable. For example, in the above embodiment, the case of monitoring the particle size distribution of coke as the particle size distribution of the raw material charged into the blast furnace 1 has been described as an example. However, the present invention is not limited thereto, and the present invention is also applicable to a case of monitoring the particle size distribution of other raw materials, for example, ore.

In the above embodiment, the information acquisition device 14 acquires the information for identifying the particle size distribution of the coke while the coke as the raw material is conveyed by the conveyor 2, but the present invention is not limited thereto. The above information may be acquired at a time point before raw material conveyance (for example, when the raw material is cut out from the supply hopper 28).

In the above embodiment, the color pattern images 40 corresponding to a predetermined number of times of charging are displayed side by side along the vertical direction of the screen 25, but the present invention is not limited thereto, and the color pattern images may be displayed side by side along the horizontal direction of the screen 25.

In the above embodiment, the color pattern image 40 for each time of charging is displayed together with the blast furnace image Gt. In addition, in the above embodiment, each of the color pattern images 40 is displayed in association with the image of the raw material layer (specifically, the coke layer 6) formed in the blast furnace 1 in the blast furnace image Gt. However, the present invention is not limited thereto, and only the color pattern image 40 may be displayed alone without displaying the blast furnace image Gt.

In the above embodiment, one batch of the raw material (the coke 26) is cut out from the supply hopper 28, sieved through the sieve 30, and then conveyed by the conveyor 2. In such a configuration, a predetermined amount of raw material is continuously charged into the blast furnace 1 in a single time of charging (one batch), but the invention is not limited thereto. One batch of raw material may be intermittently charged into the blast furnace 1.

In the above embodiment, the particle size distribution of the raw material charged into the blast furnace 1 is monitored using the particle size distribution monitoring apparatus and the monitoring method of the present invention. However, the present invention is not limited thereto, and the particle size distribution monitoring apparatus and the monitoring method of the present invention can also be used in the case of monitoring the particle size distribution of a substance charged into the furnace including the blast furnace 1. Here, the substance charged into the furnace corresponds to the raw material charged into the blast furnace 1 in the above embodiment. The furnace control and the method of controlling a furnace correspond to the operation of the blast furnace 1 and the blast furnace operation method in the above embodiment. That is, the particle size distribution monitoring apparatus and the monitoring method of the present invention can be used in a furnace in which ventilation is performed in the furnace to burn a substance (corresponding to a raw material), in other words, the substance and a gas are reacted. Here, a type of the gas can be selected according to a mechanism of the blast furnace 1, the furnace or the like, and for example, air, oxygen, hydrogen, or a gas containing these can be used.

According to the furnace and the method of controlling a furnace, the above-described effects of the present invention can be obtained. That is, similarly to the blast furnace operation method in the above embodiment, by visualizing and displaying the particle size distribution of the substance charged into the furnace and setting a control condition of the furnace according to the visualized particle size distribution, the method of controlling a furnace of the present invention (corresponding to the method of operating the blast furnace 1) capable of suitably controlling the furnace is achieved.

### DESCRIPTION OF SYMBOLS

- 1: Blast furnace
- 2: Conveyor
- 3: Receiving hopper
- 4: Charging chute
- 5: Ore layer
- 6: Coke layer
- 7: Tuyere
- 8: Cohesive zone
- 10: Particle size distribution monitoring system
- 12: Particle size distribution monitoring apparatus
- 14: Information acquisition device
- 16: Device body
- 18: Laser irradiator
- 20: Information processing device
- 21: Arithmetic unit
- 22: Particle size distribution identification unit
- 23: Particle size distribution display unit
- 24: Storage unit
- 25: Screen
- 26: Coke
- 28: Supply hopper
- 30: Sieve
- 40: Color pattern image
- Gt: Blast furnace image
- P: Display range
- Px: Region
- Py: Rectangular region

## Claims

1. A particle size distribution monitoring apparatus comprising:
an information acquisition device that acquires information for identifying a particle size distribution of a raw material to be charged, at least once for each time of charging of the raw material; and
an information processing device that processes the information,
wherein the information processing device includes
a particle size distribution identification unit that identifies the particle size distribution for each time of the charging from the information acquired by the information acquisition device at least once for each time of the charging, and
a particle size distribution display unit that visualizes the particle size distribution identified for each time of the charging by the particle size distribution identification unit, and displays a visualized particle size distribution for each time of the charging on a screen in association with the time of the charging.

2. The particle size distribution monitoring apparatus according to claim 1, wherein the particle size distribution display unit displays the visualized particle size distribution for each time of the charging in a region corresponding to each time of the charging in a display range partitioned into a plurality of regions.

3. The particle size distribution monitoring apparatus according to claim 2,
wherein the display range is defined by a first axis along a vertical direction of the screen and a second axis along a lateral direction of the screen,
the plurality of regions are arranged along the first axis,
each of the plurality of regions is partitioned into a plurality of rectangular regions arranged along the second axis,
each of the plurality of rectangular regions is associated with a section of a particle size,
a representative value of the section associated with each of the plurality of rectangular regions increases toward one end side in the lateral direction of the screen along the second axis, and
the particle size distribution display unit displays, as the visualized particle size distribution, a color pattern image in which each of the plurality of rectangular regions is indicated by a color corresponding to an appearance frequency of the raw material for a particle size included in the section associated with each of the plurality of rectangular regions.

4. The particle size distribution monitoring apparatus according to any one of claims 1 to 3,
wherein the information acquisition device acquires a plurality of pieces of information while the raw material to be charged in a single time of the charging is conveyed, and
the particle size distribution identification unit identifies the particle size distribution for each time of the charging from the plurality of pieces of information acquired by the information acquisition device for the raw material to be charged in a single time of the charging.

5. A particle size distribution monitoring method comprising:
a step of acquiring information for identifying a particle size distribution of a raw material to be charged, at least once for each time of charging of the raw material;
a step of identifying the particle size distribution for each time of the charging from the information acquired at least once for each time of the charging; and
a step of visualizing the particle size distribution identified for each time of the charging and displaying a visualized particle size distribution for each time of the charging on a screen in association with the time of the charging.

6. A computer program for causing a computer to perform each step in the particle size distribution monitoring method according to claim 5.

7. A furnace comprising
the particle size distribution monitoring apparatus according to any one of claims 1 to 4,
wherein a particle size distribution of a substance charged into the furnace is identified by the particle size distribution monitoring apparatus.

8. A blast furnace comprising
the particle size distribution monitoring apparatus according to any one of claims 1 to 4,
wherein a particle size distribution of a raw material charged into the blast furnace is identified by the particle size distribution monitoring apparatus.

9. A method of controlling a furnace comprising:
a step of acquiring information for identifying a particle size distribution of a substance charged into the furnace at least once for each time of charging of the substance;
a step of identifying the particle size distribution for each time of the charging from the information acquired at least once for each time of the charging;
a step of visualizing the particle size distribution identified for each time of the charging and displaying a visualized particle size distribution for each time of the charging on a screen in association with the time of the charging; and
a step of setting a control condition of the furnace according to the visualized particle size distribution displayed on the screen.

10. A blast furnace operation method comprising:
a step of acquiring information for identifying a particle size distribution of a raw material charged into a blast furnace at least once for each time of charging of the raw material;
a step of identifying the particle size distribution for each time of the charging from the information acquired at least once for each time of the charging;
a step of visualizing the particle size distribution identified for each time of the charging and displaying a visualized particle size distribution for each time of the charging on a screen in association with the time of the charging; and
a step of setting an operation condition of the blast furnace according to the visualized particle size distribution displayed on the screen.
